Europäisches Patentamt

European Patent Office

Office européen des brevets

(19)

(11) EP 0 926 475 A2

(12) **EUROPÄISCHE PATENTANMELDUNG**

(43) Veröffentlichungstag:
30.06.1999 Patentblatt 1999/26

(51) Int Cl.⁶: **G01F 23/26**

(21) Anmeldenummer: 98811170.4

(22) Anmeldetag: 26.11.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **22.12.1997 DE 19757190**

(71) Anmelder: **ABB RESEARCH LTD.**
**8050 Zürich (CH)**

(72) Erfinder:
• **Byatt, Anthony, Dr.**
**5313 Klingnau (CH)**

• **Christen, Thomas, Dr.**
**5300 Turgi (CH)**
• **Kleiner, Thomas**
**5415 Nussbaumen (CH)**
• **Matter, Daniel, Dr.**
**5200 Brugg (CH)**
• **Rüegg, Walter, Dr.**
**5304 Endingen (CH)**

(74) Vertreter: **Lück, Gert, Dr. et al**
**Asea Brown Boveri AG**
**Immaterialgüterrecht(TEI)**
**Haselstrasse 16/699 I**
**5401 Baden (CH)**

(54) **Kapazitiver Füllstandssensor mit integrierter Schmutzfilmdetektion**

(57) Die vorliegende Erfindung hat ein Verfahren und eine Vorrichtung zur kapazitiven Füllstandsmessung zum Gegenstand, welche besonders zur Füllstandsbestimmung zwischen adhäsiven Medien 10, 11 unterschiedlicher Leitfähigkeit geeignet sind. Das bekannte Sensorprinzip beruht darauf, dass zwischen benachbarten Elektroden 13, 4; 4, 5; 5, 6 einer stabförmigen Sonde 1 die umgebungsabhängige Kapazität gemessen wird. Erfindungsgemäss weist die Sonde 1 Elektroden 4, 5, 6, 13 mit Abdeckungen 7 unterschiedlicher Dicken $d_i$ auf. Dann ist die effektive Dicke $d_s / \varepsilon_s$ eines isolierenden Schmutzfilms 14 durch Kapazitätsmessungen zwischen mindestens zwei Paaren von Elektroden 4, 5, 6, 13 bestimmbar. Der Einfluss eines leitfähigen Schmutzfilms 14 auf das Kapazitätssignal ist durch die Wahl mindestens einer geeigneten Messfrequenz eliminierbar. Ferner wird durch Optimierung der Elektrodenhöhe h ein grosser Kapazitätssprung für eine digitale Füllstandsanzeige und/oder eine weitgehend kontinuierliche Kapazitätszunahme für eine analoge Füllstandsanzeige erzielt. Bevorzugt wird der Sensor zur Ortsbestimmung einer Grenzschicht 12 zwischen Wasser 10 und Öl 11 in einem Separatortank eingesetzt.

Figur 3a

**Beschreibung**

**TECHNISCHES GEBIET**

Die Erfindung bezieht sich auf das Gebiet der Füllstandsanzeigen. Sie geht aus von einem Verfahren zur Füllstandsmessung und einem kapazitiven Füllstandssensor nach dem Oberbegriff des Anspruchs 1 und 4.

**STAND DER TECHNIK**

Im Stand der Technik sind eine Vielzahl von Vorrichtungen zur Bestimmung des Füllstandes eines Behälters bekannt, die auf sehr unterschiedlichen physikalischen Messprinzipien beruhen. Diese umfassen elektrische (kapazitive oder resistive) und optische Methoden, Radarreflexionsmethoden, Ultraschall-Laufzeitmethoden sowie Gammaabsorptionsmethoden.

Bei der Offshore-Erdölförderung werden sog. Separationstanks eingesetzt, in welchen die bei der Bohrung bzw. Förderung auftretenden verschiedenen Phasen (Sand, Wasser, Öl und Gas) aufgrund ihrer Dichteunterschiede separiert und in getrennten Leitungssystemen abgeführt werden. Es ist dabei sehr wichtig, die Höhe der Trennschicht zwischen Wasser und Oel zu kennen, um am Tank die Ablassventile für die beiden Medien kontrolliert öffnen und schliessen zu können. Hierzu werden zuverlässige Füllstandsmessgeräte benötigt. Funktioniert ein solches Füllstandsmessgerät nicht oder nicht richtig, kann z. B. Öl in den Wasserauslass geraten und grosse Umweltbelastungen und Kosten verursachen.

Neuerdings werden Hochdruck - Separationstanks entwickelt, die für den Betrieb auf dem Meeresboden einige 100 m unterhalb der Meeresoberfläche geeignet sind. Das geförderte und bereits separierte Öl kann dann mit viel geringerem Energieaufwand an die Meeresoberfläche gepumpt werden. Solche Separatortanks sind sehr hohen Drücken von 60 bar - 180 bar sowie hohen Temperaturen von 50 - 120 °C ausgesetzt. Das Füllstandsmesssystem muss unter diesen schwierigen Bedingungen jahrelang wartungsfrei und zuverlässig funktionieren, da ein Betriebsausfall und vorzeitiger Ersatz hohe Kosten verursachen würde.

In einer früheren, nicht vorveröffentlichten deutschen Patentanmeldungen (Aktenzeichen 197 13 267.7) wird als eine Lösung dieses Problems eine kapazitive Messsonde vorgeschlagen, die sich insbesondere den grossen Sprung der Dielektrizitätskonstanten an der Grenzfläche zwischen Öl und Wasser zunutze macht. Die stabförmige, in sich geschlossene Sonde trägt entlang der Achse mehrere ringförmige oder torusförmige, zum Teil in Längsrichtung segmentierte Elektroden. Die Streukapazität zwischen benachbarten Elektroden variiert mit der Dielektrizitätskonstanten des Umgebungsmediums. Die Kapazitätssignale der Elektrodenpaare können einzeln für eine digitale Füllstandsanzeige oder gemittelt für eine analoge Füllstandsanzeige verwendet werden. In beiden Fällen ist die Ortsauflösung durch die Periodizität der Elektrodenanordnung begrenzt. Dazwischenliegende Füllstände sind nicht messbar. Nachteilig ist auch, dass Grenzschichten zwischen Medien gleicher Dielektrizitätskonstanten nicht nachweisbar sind. Alternativ oder ergänzend wird für Medien mit unterschiedlicher Leitfähigkeit vorgeschlagen, zur Ortung der Grenzschicht die ohmschen Entladeströme der Elektrodenpaar - Kapazitäten zu messen. Hierfür ist eine Messfrequenz so niedrig zu wählen, dass in beiden Medien der ohmsche gegenüber dem kapazitiven Strom dominant ist. Auswirkungen der Leitfähigkeit der Medien auf die Geometrie und Grösse der effektiv wirksamen Elektrodenpaar - Kapazitäten bleiben jedoch ausser Betracht.

Die Verschmutzung der Messsonde durch die zu messenden Medien stellt ein grosses Problem für die Messgenauigkeit und Zuverlässigkeit derartiger Füllstandssensoren dar. Beispielsweise kann ein leitfähiger Wasserfilm die Detektion eines Ölmediums und ein nichtleitender Ölbelag die Detektion eines Wassermediums stören oder verunmöglichen. In der oben genannten Patentanmeldung wird vorgeschlagen, die Sonde speziell für Messungen im Nah-und Fernbereich auszulegen: die Streukapazitäten sind ein Mass für den Nahbereich der Messsonde, wenn die Elektroden grossflächig und/oder weit beabstandet sind, und ein Mass für den Fernbereich, wenn die Elektroden kleinflächig und/oder nah beabstandet sind. Nachteilig ist jedoch, dass die optimale Elektrodengeometrie nur im Hinblick auf die Reichweite der Streufelder in dielektrischen Medien und zudem nur qualitativ angegeben wird. Der Fernbereich ist schliesslich auch durch Kapazitätsmessungen zwischen der Sonde und einer zusätzlichen Gegenelektrode, z. B. der Behälterwand, gut erfassbar. Ferner kann der Nahbereich in leitfähigen Medien aufgrund des Skineffekts gemessen werden. Für Eindringtiefen im mm - Bereich sind aber höchste Frequenzen, im Fall von Wasser beispielsweise 10 GHz und darüber, erforderlich.

In der DE 28 19 731 wird ein kapazitiver Sensor offenbart, der zu Grenzwertüberwachung eines adhäsiven, leitfähigen Mediums dient. Die Kapazitätsmessung erfolgt zwischen einer stabförmigen Sonde und der Behälterwand. Durch leitfähige Ablagerungen auf der Sonde und der Wand können Fehlerströme verursacht werden, die von einer Schirmelektrode entlang der Sondenachse erfasst werden. Die Fehlerströme können auch durch möglichst hohe Messfrequenzen klein gehalten werden. Ein Nachteil dieser Anordnung besteht darin, dass die Füllstandshöhe nicht kontinuierlich messbar ist.

Die DE 38 12 687 A1 zeigt einen kapazitiven Sensor zur gleichzeitigen Bestimmung des Füllstands und des Wassergehalts einer zumindest schwach leitfähigen Flüssigkeit. Hierfür werden zwei koaxial angeordnete Elektroden in das Medium getaucht und bei mindestens zwei Frequenzen die komplexe Impedanz gemessen. Der kapazitive Blindwiderstand ist ein Mass für den Füllstand und der ohmsche Wirkwiderstand ein Mass für die Leitfähigkeit des Mediums.

Bei keinem der genannten Sensoren wird berücksichtigt, dass die Kapazitätsmessung in leitfähigen Medien durch ionischen Ladungstransport beeinflusst wird, woraus sich neue Möglichkeiten zur Eliminierung der störenden Einflüsse isolierender und leitfähiger Schmutzbeläge ergeben. Darüberhinaus können neue Bedingungen zur Optimierung der Elektrodengeometrie angegeben werden.

## DARSTELLUNG DER ERFINDUNG

Aufgabe der vorliegenden Erfindung ist es, ein Verfahren zur Füllstandsmessung und einen kapazitiven Füllstandssensor anzugeben, die sich durch eine reduzierte Störungsanfälligkeit bei Verschmutzung auszeichnen. Diese Aufgabe wird erfindungsgemäss durch die Merkmale des Anspruchs 1 und 4 gelöst.

Kern der Erfindung ist es nämlich, mit Hilfe von Kapazitätsmessungen zwischen Elektroden, die entlang einer stabförmigen Sonde angeordnet und mit elektrisch isolierenden Abdeckungen unterschiedlicher Dicke versehen sind, eine effektive Dicke eines isolierenden Schmutzfilms zu bestimmen.

Ein erstes Ausführungsbeispiel zeigt ein Verfahren, bei dem aus Kapazitätsmessungen ein Quotient von Doppelschichtkapazitäten zweier Elektroden bestimmt, eine Schmutzfilmdicke berechnet und gegebenenfalls deren Einfluss auf das Kapazitätssignal eliminert wird. Dabei wird eine Messsonde gezeigt, bei welcher durch radiale Versetzung der Elektroden unterschiedliche Abdeckungsdicken realisiert sind.

In einem zweiten Ausführungsbeispiel wird gezeigt, wie mit geeigneten Messfrequenzen leitfähige Schmutzfilme auf der Sonde detektierbar und ihr Einfluss auf das Kapazitätssignal eliminierbar sind.

Ein drittes Ausführungsbeispiel zeigt eine Messsonde, bei welcher durch Optimierung der Elektrodenhöhe die Kapazität zwischen benachbarten Elektroden für leitfähige Medien gross und für isolierende Medien klein gewählt ist.

Ein viertes Ausführungsbeispiel stellt eine Variante dar, bei welcher die Elektrodenhöhe möglichst gross gewählt ist, um einen weitgehend kontinuierlichen Messbereich zu realisieren.

Zusätzliche Ausführungsbeispiele ergeben sich aus den abhängigen Ansprüchen und aus Kombinationen erfindungswesentlicher Merkmale.

Wichtige Vorteile des erfindungsgemässen kapazitiven Füllstandssensors betreffen die verbesserte Zuverlässigkeit bei der Füllstandsbestimmung adhäsiver Medien, die hohe Messgenauigkeit über einen grossen Messbereich und die Möglichkeit einer digitalen oder analogen Füllstandsanzeige

Ein weiterer bedeutender Vorteil besteht darin, dass sämtliche Massnahmen, durch welche die Störeinflüsse durch isolierende und leitfähige Schmutzfilme minimiert sowie die Kapazitätssignale und der Messsbereich maximiert werden, miteinander gut kompatibel sind.

Desweiteren vorteilhaft sind der einfache, robuste Aufbau ohne bewegliche Teile, die weitgehende Wartungsfreiheit und die hervorragende Eignung der Messsonde zur Detektion einer Grenzschicht zwischen Wasser und Öl.

## KURZE BESCHREIBUNG DER ZEICHNUNGEN

Die Erfindung wird nachstehend anhand von Ausführungsbeispielen erläutert. Es zeigen:

Fig. 1    eine kapazitive Messsonde mit mehreren übereinander angeordneten Elektroden und rundem oder quadratischem Querschnitt;

Fig. 2    eine Detailansicht einer verschmutzungsfreien Messsonde gemäss Fig. 1 mit Ersatzschaltbildern für die Impedanz zwischen einem Elektrodenpaar;

Fig. 3    eine Detailansicht einer Messsonde mit (a) alternierend und (b) beliebig radial versetzten Elektroden zur Detektion eines isolierenden Schmutzfilms und zugehörigem Ersatzschaltbild für die Impedanz zwischen einem Elektrodenpaar;

Fig. 4    eine Detailansicht einer Messsonde mit einem leitfähigen Schmutzfilm und zugehörigem Ersatzschaltbild für die Impedanz zwischen einem Elektrodenpaar;

Fig. 5    ein Elektrodenpaar - Kapazitätsverhältnis $C_\sigma / C_\varepsilon$ für ein leitfähiges relativ zu einem isolierenden Medium als Funktion der Elektrodenhöhe h für eine Messsonde gemäss Fig. 2;

Fig. 6    eine Elektrodenpaar - Kapazität C als Funktion einer Füllstandshöhe z für zwei Dicken $d_e$ der Elektrodenabdeckung für eine Messsonde gemäss Fig. 2;

In den Figuren sind gleiche Teile mit gleichen Bezugszeichen versehen.

## WEGE ZUR AUSFÜHRUNG DER ERFINDUNG

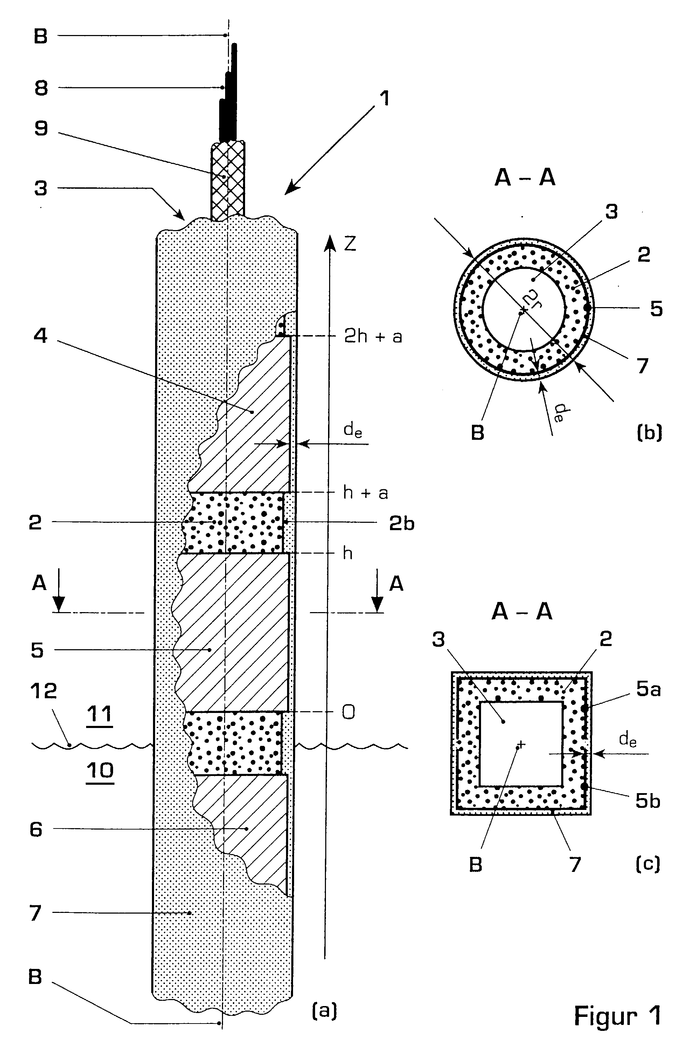

Die Erfindung hat ein Verfahren und eine Vorrichtung zur kapazitiven Füllstandsmessung zum Gegenstand, welche besonders zur Füllstandsbestimmung adhäsiver Medien, beispielsweise zur Ortsbestimmung einer Grenzschicht 12 zwischen Wasser 10 und Öl 11 in einem Separatortank, geeignet sind. Fig. 1 zeigt ausschnittsweise (a) eine Seitenansicht eines erfindungsgemässen Füllstandssensors und (b), (c) Ausführungsbeispiele für einen runden und rechteckigen Sensorquerschnitt. Der kapazitive Füllstandssensor umfasst eine stabförmige Sonde 1 mit mehreren, entlang einer Sondenachse B angeordneten Elektroden 4, 5, 6, 13, die über Messleitungen 8 mit einer nicht dargestellten Messelektronik verbunden sind. Die prinzipielle Funktionsweise beruht darauf, dass zwischen benachbarten Elektroden 13, 4; 4, 5; 5, 6 die Kapazitätsänderung gemessen wird, welche durch eine Verschiebung einer Grenzschicht 12 zwischen einem leitfähigen 10 und einem isolierenden Medium 11 verursacht wird. Gemäss Fig. la besteht die Messsonde 1 im wesentlichen aus einem zylindrischen, elektrisch isolierenden Rohr 2, an dessen äusserer Mantelfläche 2b die Elektroden 4, 5, 6, 13 aufgebracht sind. Das Rohrinnere 3 ist gegenüber dem die Sonde 1 umgebenden Aussenraum abgeschlossen. Vorzugsweise sind die Elektroden 4, 5, 6, 13 mit einer elektrisch isolierenden, dünnen Abdeckung 7 versehen, welche die Elektroden 4, 5, 6, 13 gegen mechanische und/oder chemische Umwelteinflüsse schützt. Die Sonde 1 kann einen beliebigen Querschnitt aufweisen. Bevorzugt ist das Rohr 2 kreiszylindrisch und sind die Elektroden 4, 5, 6, 13 ringförmig (Fig. 1b). Es können auch segmentförmige (Fig. 1c) Elektroden 5a, 5b zu einer einzigen Elektrode 5 zusammengeschlossen sein.

Zur Analyse der Elektrodengeometrie und für ihre Ausgestaltung zur Detektion störender Schmutzfilme wird in der Erfindung von der wesentlichen Erkenntnis ausgegangen, dass der Sprung der Leitfähigkeit an der Grenzschicht 12 in erster Linie die Feldlinienverteilung der beteiligten Kapazitäten und damit die Gesamtkapazität zwischen benachbarten Elektroden, d. h. die Elektrodenpaar - Kapazität C, ändert.

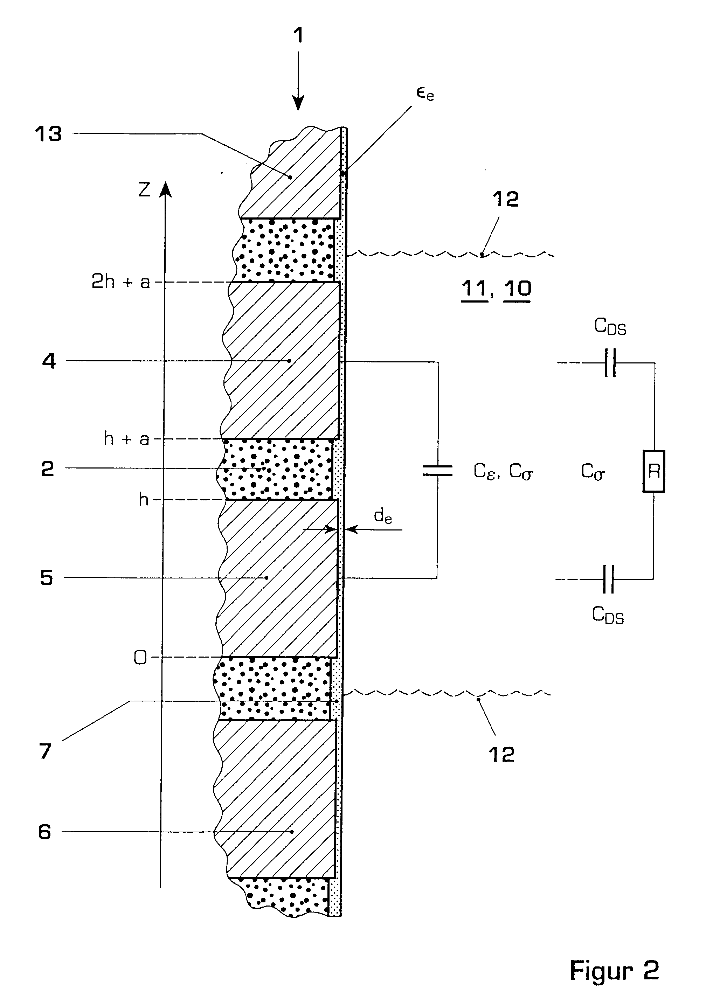

Fig. 2 stellt eine Detailansicht der Messsonde 1 mit einem erfindungsgemäss modellierten Ersatzschaltbild für die komplexe Gesamtkapazität zwischen den Elektroden 4 und 5 dar. Im isolierenden Medium 11 ist die Streukapazität $C_e$ dominant, welche durch die Geometrie der Elektroden 4, 5 und die Dielektrizitätskonstante des Mediums 11 und des Stabmaterials gegeben ist und im konkreten Fall mit einem Finite - Elemente - Programm berechnet wird. In einem leitfähigen Medium 10 ist hingegen eine einfache analytische Darstellung möglich. In unmittelbarer Nachbarschaft zu den Elektroden 4, 5 werden Ladungsträger induziert und sehr grosse Doppelschichtkapazitäten $C_{DS}$ gebildet, welche über den Widerstand R des Mediums 10 miteinander verbunden sind und eine komplexe Gesamtkapazität

$$C_\sigma = C_{DS}/[2 \bullet (1 + i \bullet \omega \bullet \tau)] \qquad (G1)$$

bilden. Hierbei bezeichnet i = imaginäre Einheit, $\omega = 2\pi \bullet f$, f = Frequenz der Kapazitätsmessung und $\tau = RC$ - Zeitkonstante der Doppelschichtkapazität bzw. dielektrische Relaxationszeit des RC - Kreises.

Die Doppelschichtkapazität lautet

$$C_{DS} = \varepsilon_e \bullet \varepsilon_0 \bullet A/d_e \ , \qquad (G2)$$

wobei $\varepsilon_e$ = Dielektrizitätskonstante und $d_e$ = Dicke der dielektrischen Elektrodenabdeckung 7, $\varepsilon_0$ = Influenzkonstante und A = Doppelschicht - Kondensatorfläche = Fläche der zugehörigen Elektrode (4, 5, 6, 13 inklusive Abdeckung 7). $C_{DS}$ ist somit durch die effektive Dicke $d_e/\varepsilon_e$ der Elektrodenabdeckung 7 und die Fläche der Elektrode 4, 5, 6, 13 gegeben, ist aber unabhängig von der Dielektrizitätskonstanten des leitfähigen Mediums 10.

Die dielektrische Relaxationszeit $\tau$ ist ein Mass für die Geschwindigkeit, mit welcher die Doppelschichtkapazität geladen bzw. gebildet wird. Man kann $\tau$ in der Form

$$\tau = R \bullet C_{DS}/2 = \tau_0 \bullet K = \varepsilon_e \bullet \varepsilon_0 \bullet \rho_M \bullet K \ \text{mit} \qquad (G3)$$

$$K = (A/A_l) \bullet (h/d_e) \tag{G3'}$$

schreiben, wobei $\rho_M$ = spezifischer Widerstand des Mediums 10, K = dimensionsloser Geometriefaktor, $A_l$ = effektive stromdurchflossene Fläche und h = Elektrodenhöhe. Typische Werte des Geometriefaktors sind 1 < K < 100.

Ein Ziel der Erfindung ist es, auch bei Anwesenheit eines elektrisch isolierenden oder leitfähigen Schmutzfilms 14 auf der Staboberfläche 15 eine zuverlässige Kapazitätsmessung bzw. Füllstandsbestimmung zu gewährleisten.

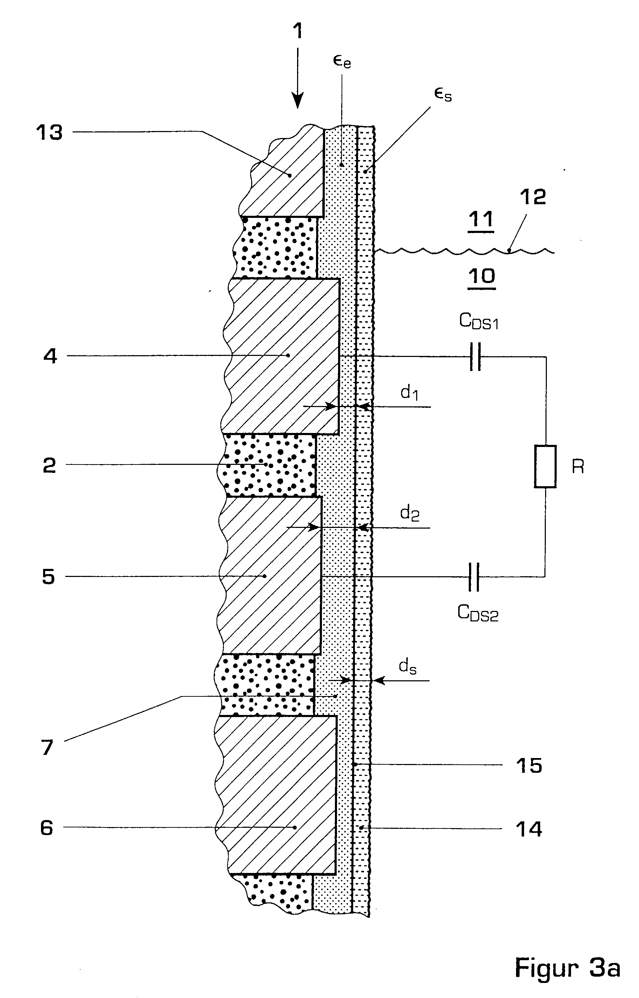

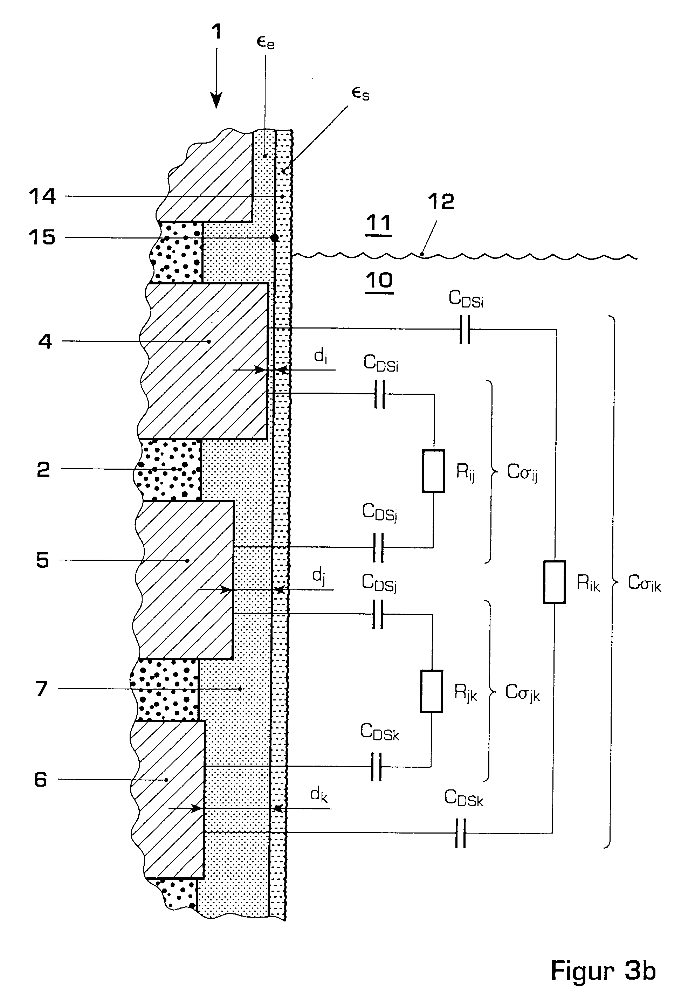

Fig. 3 zeigt ein Ausführungsbeispiel einer Elektrodenanordnung 4, 5, 6, 13, die besonders zur kapazitiven Füllstandsmessung in Gegenwart eines isolierenden Schmutzfilms 14 beispielsweise aus Öl geeignet ist. Die erfindungsgemässe Idee besteht darin, dass die Sonde 1 Elektroden 4, 5, 6, 13 mit Abdeckungen 7 unterschiedlicher Dicken $d_i$ aufweist und die Messelektronik Mittel zur Kapazitätsmessung zwischen mehreren Elektroden (4, 5, 6, 13), zur Bestimmung eines Quotienten von Doppelschichtkapazitäten $C_{DSj}$ und $C_{DSi}$ vor der i - ten und j - ten Elektrode und zur Berechnung einer effektiven Dicke $(d_s/\varepsilon_s)$ eines isolierenden Schmutzfilms (14) umfasst.

Im folgenden seien die Elektroden 4, 5, 6 als die i - te, j - te und k - te Elektrode mit den zugehörigen Abdeckungsdicken $d_i$, $d_j$ und $d_k$ und Kondensatorflächen $A_i$, $A_j$ und $A_k$ bezeichnet, wobei i, j, k = 1, 2, ..., n Indizes zur Durchnumerierung der Elektroden und n die Gesamtzahl der Elektroden 4, 5, 6, 13 ist. In einem leitfähigen Medium 10 treten im Fall $d_i \neq d_j$ unterschiedliche Doppelschichtkapazitäten $C_{DSi} \neq C_{DSj}$ vor der i - ten und j - ten Elektrode 4, 5 auf, die unterschiedlich stark mit der effektiven Dicke $d_s/\varepsilon_s$ des isolierenden Schmutzfilms 14 variieren, wobei $d_s$ = geometrische Dicke und $\varepsilon_s$ = Dielektrizitätskonstante des Films 14. In Analogie zur Gleichung G2 gilt nämlich für die durch den Film 14 verfälschten Werte der Doppelschichtkapazitäten

$$C_{DSi} = \varepsilon_0 \bullet A_i/(d_i/\varepsilon_e + d_s/\varepsilon_s) \, , \tag{G4}$$

$$C_{DSj} = \varepsilon_0 \bullet A_j \, (d_j/\varepsilon_e + d_s/\varepsilon_s) \, . \tag{G5}$$

Daraus ist erfindungsgemäss die effektive Dicke des Films 14

$$d_s/\varepsilon_s = (d_i/\varepsilon_e) \bullet [(C_{DSj} \bullet d_j \bullet A_i)/(C_{DSi} \bullet d_i \bullet A_j)-1]/[1-C_{DSj} \bullet A_i/C_{DSi} \bullet A_j] \tag{G6}$$

bestimmbar, was sich für gleiche Kondensatorflächen $A_i = A_j = A$ vereinfacht zu

$$d_s/\varepsilon_s = (d_i/\varepsilon_e) \bullet [(C_{DSj} \bullet d_j)/(C_{DSi} \bullet d_i)-1]/[1-C_{DSj}/C_{DSi}] \, . \tag{G7}$$

Der Quotient der Doppelschichtkapazitäten $C_{DSj} / C_{DSi}$ in Gleichung G6 oder G7 ist durch Kapazitätsmessungen zwischen mehreren Elektroden 4, 5, 6, 13 bestimmbar. Mit Vorteil weisen benachbarte Elektroden 13, 4; 4, 5; 5, 6 unterschiedliche Dicken $d_i \neq d_j$ (j = i + 1) und übernächst benachbarte Elektroden 13, 5 bzw. 4, 6 gleiche Dicken $d_i = d_k$ (k = i + 2) der Abdeckung 7 auf. Dann sind die in Anwesenheit des Films 14 gemessenen Kapazitätswerte zwischen übernächsten Elektroden 4, 6 bzw. 13, 5 für kleine Frequenzen gleich $C_{\sigma_i} = C_{DSi}/2$ bzw. $C_{\sigma_j} = C_{DSj}/2$ und es gilt

$$C_{DSj}/C_{DSi} = C_{\sigma_j}/C_{\sigma_i} \, . \tag{G8}$$

Die minimal detektierbare effektive Dicke $(d_s/\varepsilon_s)_{min}$ ist durch die relative Messungenauigkeit $\Delta$ bei der Bestimmung des Quotienten $C_{DSj} / C_{DSi}$ gegeben:

$$(d_s/\varepsilon_s)_{min} = (d_i \bullet d_j)/(|d_i-d_j| \bullet \varepsilon_e) \bullet \Delta \, . \tag{G9}$$

Als Beispiel sei $d_i$ = 0,5 mm, $d_j$ = 1 mm, $\varepsilon_e = \varepsilon_s$ und $\Delta$ = 10% angenommen. Dann beträgt die minimal detektierbare geometrische Dicke des isolierenden Schmutzfilms 14 $d_s$ = 0,05 mm.

Fig. 3b zeigt einen allgemeinen Fall unterschiedlicher Abdeckungsdicken $d_i \neq d_j \neq d_k$ über den Elektroden 4, 5, 6. Dann gilt

$$C_{DSj}/C_{DSi} = (C_{\sigma_{ij}}{}^{-1} + C_{\sigma_{ik}}{}^{-1} - C_{\sigma_{jk}}{}^{-1})/(C_{\sigma_{ij}}{}^{-1} + C_{\sigma_{jk}}{}^{-1} - C_{\sigma_{ik}}{}^{-1}) \,, \qquad \text{(G10)}$$

wobei die $C_{\sigma_{ij}} = (C_{DSi}{}^{-1} + C_{DSj}{}^{-1})^{-1}$ usw. die Gesamtkapazitäten bezeichnen, die zwischen der i - ten und j - ten usw. Elektrode gegebenenfalls frequenzselektiv messbar sind, d. h. die $C_{\sigma_{ij}}$, $C_{\sigma_{ik}}$, $C_{\sigma_{jk}}$ bezeichnen die Gesamtkapazitäten, die zwischen der i - ten und j -ten, j - ten und k - ten, i - ten und k - ten Elektrode gemessen werden.

Die Dicken $d_i$ der Abdeckung 7 können also beliebig gewählt sein, sofern benachbarte, d. h. zu einer Elektrodenpaar - Kapazität C gehörige, Elektroden 13, 4; 4, 5; 5, 6 unterschiedliche Dicken $d_i \neq d_{i+1}$ aufweisen. Unterschiedliche Dicken $d_i \neq d_{i+1}$ können auch für Elektroden 4, 5, 6, 13 mit gleichem Querschnitt, insbesondere gleichem Radius, realisiert sein, indem die Oberfläche 15 der Sonde 1 stufenförmige, insbesondere ringförmige, Erhöhungen mit unterschiedlichen Stufenhöhen über benachbarten Elektroden 13, 4; 4, 5; 5, 6 aufweist. Dann sind in den Gleichungen G4 - G6 die entsprechenden Werte der zugehörigen Kondensatorflächen $A_i$ und $A_j$ einzusetzen. Wie aus Fig. 3a ersichtlich sind vorzugsweise die Oberfläche 15 der Sonde 1 kreiszylindrisch, die Elektroden 4, 5, 6, 13 ringförmig, ihre Kondensatorflächen $A_i = A_j$ gleich, benachbarte Elektroden 13, 4; 4, 5; 5, 6 weisen unterschiedliche Dicken $d_i \neq d_{i+1}$ und übernächst benachbarte Elektroden 13, 5; 4, 6 gleiche Dicken $d_i = d_{i+2}$ der Abdeckung 7 auf.

Im Prinzip könnte ein isolierender Schmutzfilm 14 auch dadurch festgestellt werden, dass die Elektrodenpaar - Kapazität $C_\sigma$ in einem leitfähigen Medium 10 gegenüber einem fix vorgegebenen Sollwert absinkt. Ein Vorteil mehrerer unabhängiger Kapazitätsmessungen mit unterschiedlichen Abdeckungsdicken $d_i \neq d_j$ besteht jedoch darin, dass der isolierende Schmutzfilme 14 auch bei veränderlichen oder verschiedenen Medien 10 mit grosser Zuverlässigkeit detektierbar und messbar ist. Insbesondere fallen bei den Quotientenbildungen in den Gleichungen G8 und G10 multiplikative Messwertänderungen heraus.

Die mit Hilfe der Gleichungen G6 oder G7 bestimmte effektive Dicke $d_s / \varepsilon_s$ eines dielektrischen Schmutzfilms 14 kann auf verschiedene Weise zur Kontrolle und/oder Korrektur der Füllstandsmessung benutzt werden. Beispielsweise sind unverfälschte Werte der Doppelschichtkapazitäten und der Gesamtkapazität $C_\sigma$ durch rechnerische Eliminierung von $d_s / \varepsilon_s$ in den Gleichungen G4 - G6 bestimmbar. Darüberhinaus können geeignete Massnahmen ergriffen werden, sobald $d_s / \varepsilon_s$ einen vorgebbaren kritischen Wert überschreitet. Diese umfassen insbesondere eine Mengenregelung eines Inhibitorzusatzes zur chemischen Auflösung des Schmutzfilms 14, eine bedarfsmässige oder periodische Reinigung des Messstabs 1 mittels eines axial beweglichen Ringes o. ä..

Insgesamt ist also das erfindungsgemässe Verfahren zur Füllstandsmessung dadurch charakterisiert, dass Abdeckungen 7 mit unterschiedlichen Dicken $d_i \neq d_j$ vorhanden sind und mit Hilfe von Kapazitätsmessungen zwischen mehreren Elektroden 4, 5, 6, 13 eine effektive Dicke $d_s / \varepsilon_s$ eines isolierenden Schmutzfilms 14 berechnet wird. Insbesondere wird ein Quotient von Doppelschichtkapazitäten $C_{DSj}$ und $C_{DSi}$ vor einer i - ten und j - ten Elektrode gemäss der Formel G10 oder G8 bestimmt und die effektive Schmutzfilmdicke $d_s / \varepsilon_s$ gemäss der Formel G6 oder G7 berechnet.

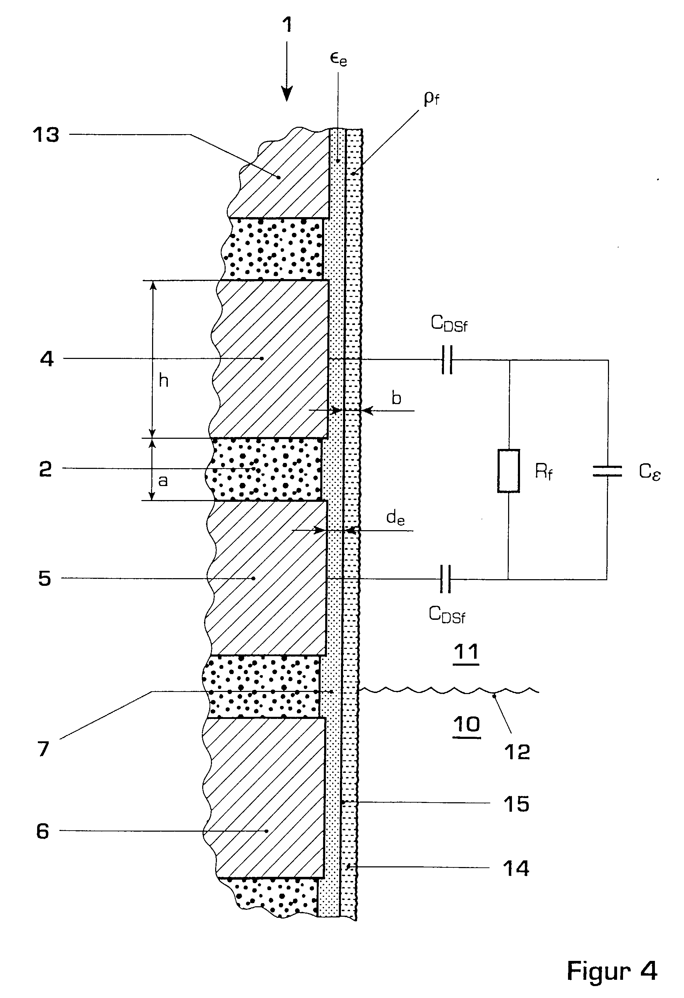

Fig. 4 zeigt ausschnittweise eine Messsonde 1, die von einem mehr oder weniger leitfähigen Schmutzfilm 14 der Dicke b und des spezifischen Widerstands $\rho_f$ bedeckt und in ein isolierendes Medium 11 eingetaucht ist. Beispielsweise kann der Schmutzfilm 14 aus Wasser oder einer Wasser - Öl - Emulsion bestehen. Einerseits trägt der Film 14 mit zwei Doppelschichtkapazitäten $C_{DSf}$ gemäss Gleichung G2

$$C_{DSf} = \varepsilon_e \bullet \varepsilon_0 \bullet 2 \bullet \pi \bullet r \bullet h/d_e \qquad \text{(G11)}$$

zur geometrischen Kapazität $C_\varepsilon$ im Medium 11 bei, wobei der Einfachheit halber eine ringförmige Elektrode angenommen wurde. Andererseits wirkt der Film 14 als elektrischer Leiter parallel zu $C_\varepsilon$ mit dem Widerstand

$$R_f = h_f \bullet \rho_f/(2 \bullet \pi \bullet r \bullet b) \,, \qquad \text{(G12)}$$

wobei $h_f$ eine effektive Länge des Strompfades im leitfähigen Schmutzfilm 14 zwischen zwei Elektroden 4, 5 bezeichnet. Näherungsweise kann $h_f$ gleich a + h/2 oder gleich h gesetzt werden. Die charakteristische RC - Zeitkonstante des Films 14

$$\tau_f = R_f \bullet C_{DSf}/2 = \tau_{f0} \bullet G \qquad \text{(G13)}$$

setzt sich aus einer materialspezifischen Zeitkonstante

$$\tau_{f0} = \varepsilon_e \bullet \varepsilon_0 \bullet \rho_f \qquad \text{(G14)}$$

und einem Geometriefaktor

$$G = h \bullet h_f/(2 \bullet d_e \bullet b) \approx h^2/(2 \bullet d_e \bullet b) \qquad \text{(G15)}$$

zusammen. Die Relaxationszeit $\tau_f$ definiert eine charakteristische Frequenz des Schmutzfilms 14

$$f(b) = \tau_f^{-1} = 2 \bullet (\varepsilon_e \bullet \varepsilon_0 \bullet \rho_f)^{-1} \bullet (d_e/h^2) \bullet b \ , \qquad \text{(G16)}$$

die insbesondere von der Dicke b des leitfähigen Schmutzfilms 14 abhängt. Die gesamte Elektrodenpaar - Kapazität nimmt unterhalb bzw. oberhalb der charakteristischen Frequenz f(b) asymptotisch die Werte

$$C(f) = C_{DSf} / 2 \qquad \qquad \text{für} \ \ f << f(b)$$

$$= C_\varepsilon \qquad \qquad \text{für} \ \ f >> f(b) \qquad \qquad \text{(G17)}$$

an. Bei tiefen Frequenzen f << f(b) kann der Schmutzfilm 14 ein leitfähiges Medium 10 simulieren, obwohl hinter dem Film 14 ein isolierendes Medium 11 verborgen ist. Bei hohen Frequenzen f >> f(b) hingegen erscheint der Schmutzfilm 14 dielektrisch transparent. Folglich ist die Messfrequenz f mit Vorteil grösser als f(b) gewählt. Hierzu ein quantitatives Beispiel: $\rho_f \approx 0,25 \ \Omega m$ (Salzwasser - Schmutzfilm 14), $\varepsilon_e \approx 3$, $\tau_{f0} \approx 7$ ps; $h \approx h_f \approx 15$ mm, $d_e = 0.5$ mm, b = 1 mm, Geometriefaktor $G \approx 200 \rightarrow f(b) = 100$ MHz. Man beachte, dass die Leitfähigkeit des Wassers stark mit dem temperatur- und druckabhängigen Salzgehalt variiert, was durch eine geeignete Frequenzwahl berücksichtigt werden kann. Besteht der Schmutzfilm 14 aus einer Emulsion von Salzwasser der Konzentration c und Öl der Konzentration 1 - c, kann $\rho_f$ $\approx \rho_{Salzwasser}{}^c \bullet \rho_{Öl}{}^{1-c}$ approximiert werden und die charakteristische Frequenz f(b) sinkt entsprechend. Für ein beliebiges Medium 10 der Konzentration c und Medium 11 der Konzentration 1 - c darf $\rho_f \approx \rho_1{}^c \bullet \rho_2{}^{1-c}$ gesetzt werden.

Im folgenden werden zwei Ausführungsbeispiele angegeben, wie bei veränderlicher Filmdicke b die Füllstandsmessung auf einfache Weise durchführbar ist. Erstens kann eine maximal zulässige Filmdicke $b_c$ und eine zugehörige kritische Frequenz $f_c$ vorgegeben sowie eine Messfrequenz oberhalb von $f_c$

$$f > f_c = f(b_c) = 2 \bullet (\varepsilon_e \bullet \varepsilon_0 \bullet \rho_f)^{-1} \bullet (d_e/h^2) \bullet b_c \qquad \text{(G18)}$$

gewählt sein. Die Einhaltung einer Filmdicke b < $b_c$ kann dann beispielsweise dadurch sichergestellt sein, dass bei ungefähr bekannter Verschmutzungsrate entsprechende Reinigungsintervalle festgelegt werden. Zweitens können eine maximal zulässige Filmdicke $b_c$ und eine zugehörige kritische Frequenz $f_c$ vorgegeben sowie zwei Messfrequenzen unterhalb bzw. oberhalb von $f_c$

$$f_a < f_c = f(b_c) \ \text{und} \ f_b > f_c = f(b_c) \qquad \text{(G19)}$$

gewählt sein. Bei Annäherung der aktuellen Filmdicke b an den kritischen Wert $b_c$ wird dann zunächst der bei niedrigerer Frequenz gemessene Kapazitätswert $C(f_a)$ absinken und der bei höherer Frequenz gemessene Kapazitätswert $C(f_b)$ konstant bleiben. Mit Hilfe einer solchen Signalsignatur können wiederum geeignete Massnahmen, wie z. B. die Zugabe eines Inhibitors oder eine Reinigung des Messstabs 1, veranlasst werden.

Ein Vorteil der Überwachung der Schmutzfilmdicken $d_s / \varepsilon_s$ und $b_c$ besteht in der erhöhten Zuverlässigkeit der Füllstandsmessung, so dass ein wartungsfreier Betrieb über längere Zeiten auch bei kontaminierenden Medien 10, 11 möglich ist. Es ist zudem sehr vorteilhaft, dass die Massnahmen zur Detektion isolierender und leitfähiger Schmutzfilme 14 problemlos miteinander kompatibel sind.

Ein weiterer Gegenstand der Erfindung ist es, diejenigen Elektrodenanordnungen anzugeben, für welche die Elektrodenpaar - Kapazität $C_\sigma$ für ein leitfähiges Medium 10 möglichst gross und $C_\varepsilon$ für ein isolierendes Medium 11 möglichst klein ist. Für die quantitative Analyse wird der Einfachheit halber angenommen, dass die Elektroden 4, 5, 6, 13 im abgerollten Zustand eine rechteckige Form der Höhe h und der Länge $2 \cdot \pi \cdot (r - d_j)$ aufweisen und daher wegen $d_e \ll r$ die Kondensatorfläche $A = 2 \cdot \pi \cdot r \cdot h$ beträgt, wobei r = Radius der Sonde 1. Gemäss Fig. 2 wird der Elektrodenabstand a zwischen der Oberkante einer unteren Elektrode 4, 5, 6 und der Unterkante einer oberen Elektrode 13, 4, 5 gemessen.

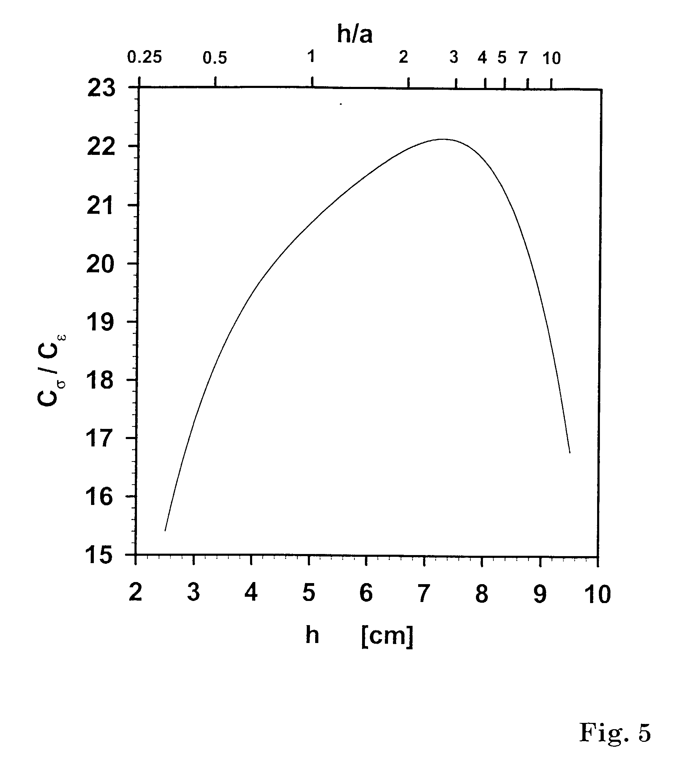

Fig. 5 zeigt das Ergebnis einer numerischen Simulation des Kapazitätsverhältnisses $C_\sigma / C_\varepsilon$ als Funktion der Elektrodenhöhe h und des Verhältnisses von Elektrodenhöhe zu Elektrodenabstand h/a. Für die Berechnung wurden die folgenden Annahmen getroffen: Sondenradius r = 5 cm, konstante Periodizität der Elektrodenanordnung a + h = 10 cm, Salzwasser als Medium 10 mit $\varepsilon_1 = 64$ und $\rho_1 = 0,25$ Ωm zur Bestimmung von $C_\sigma$, Öl als Medium 11 mit $\varepsilon_2 = 2,2$ und $\rho_2 = 10^{11}$ Ωm zur Bestimmung von $C_\varepsilon$ und $\varepsilon_e \approx \varepsilon_2$. Entgegen der bisherigen Auffassung ist das Kapazitätsverhältnis $C_\sigma / C_\varepsilon$ für kleine Elektrodenhöhen h bzw. grosse Elektrodenabstände a klein, obwohl doch das elektrische Streufeld für grosse a weiter in die Medien 10, 11 hinragen und besonders sensibel auf Veränderungen der Dielektrizitätskonstanten reagieren sollte. Statt dessen steigt $C_\sigma / C_\varepsilon$ mit zunehmender Elektrodenhöhe h an, erreicht bei ca. h = 7,5 cm oder h/a = 3 ein Maximum und fällt danach für h → 10 cm steil ab. Der Anstieg ist durch die Zunahme der Elektroden- bzw. Kondensatorfläche A der Doppelschichtkapazität $C_{DS}$ in $C_\sigma$ dominiert, der Abfall hingegen durch die Zunahme von $C_\varepsilon$ aufgrund des abnehmenden Elektrodenabstands a → 0. In diesem Ausführungsbeispiel beträgt $C_\sigma / C_\varepsilon = 20,7$ für eine symmetrische Anordnung mit Elektrodenhöhe gleich Elektrodenabstand oder h / a = 1. Insbesondere ist $C_\sigma / C_\varepsilon > 20,7$ für 1 < h/a < 6 und $C_\sigma / C_\varepsilon = 22,2$ ($C_\sigma = 378$ pF, $C_\varepsilon = 17$ pF) maximal für h / a = 3. Demzufolge ist h / a für einen hinreichend grossen Signalhub $2 \cdot C_\sigma / C_\varepsilon$ mit Vorteil zwischen 0,5 und 12, vorzugsweise zwischen 1 und 6, besonders bevorzugt zwischen 1,5 und 4,5, insbesondere gleich 3, gewählt.

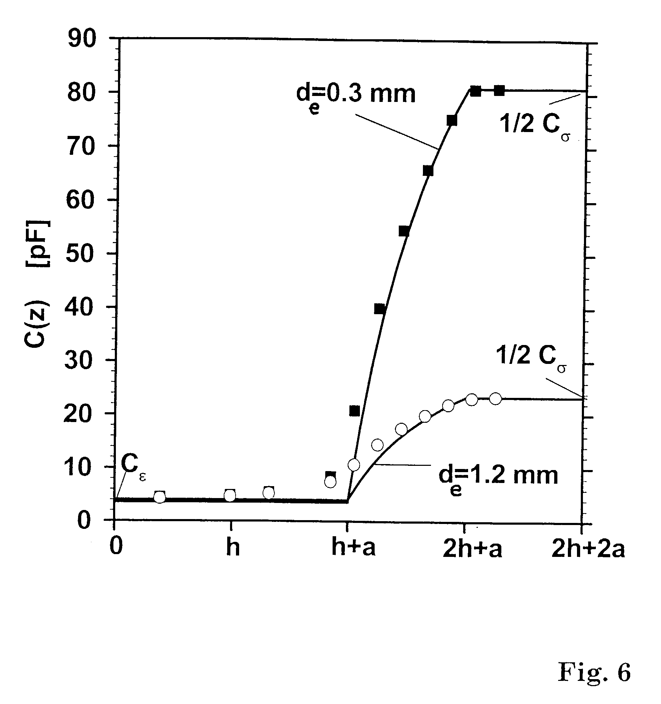

Die erfindungsgemässe Optimierung der Elektrodengeometrie umfasst ausser der Wahl einer relativen Elektrodenhöhe h / a auch die einer absoluten Elektrodenhöhe h sowie einer maximalen Dicke $d_e$ und einer Dielektrizitätskonstanten $\varepsilon_e$ der Elektrodenabdeckung 7. In Fig. 6 zeigen die durchgezogenen Linien analytische Berechnungen und die Punkte numerische Berechnungen der Elektrodenpaar - Kapazität C als Funktion der Füllstandshöhe z für zwei Dicken $d_e = 0,3$ mm und $d_e = 1,2$ mm der Elektrodenabdeckung 7. Die analytische Funktion C(z) ist erfindungsgemäss durch die Gleichung

$$C(z) = C_\varepsilon \qquad\qquad\qquad \text{für } 0 \leq z \leq h + a$$

$$= C_\varepsilon + C_\sigma \cdot z / (z + h) \qquad \text{für } h + a \leq z \leq 2 \cdot h + a \qquad (G20)$$

$$= C_\sigma / 2 \qquad\qquad\qquad \text{für } 2 \cdot h + a \leq z \leq 2 \cdot (h + a)$$

approximierbar, wobei der Einfachheit halber $C_\varepsilon \ll C_\sigma$ angenommmem wurde. Nach Fig. 6 und Gleichung G20 ist die Messung der Elektrodenpaar - Kapazität C(z) sowohl für eine digitale als auch analoge Anzeige des Ortes z der Grenzschicht 12 verwendbar.

Zunächst wird die digitale Anzeige anhand des Elektrodenpaares 4, 5 in Fig. 2 diskutiert. Die Kapazität C(z) ist für $0 \leq z \leq h + a$ weitgehend konstant. Sie springt von $C_\varepsilon$ auf den Wert $C_\sigma / 2$, wenn die Grenzschicht 12 von z = h + a bis z = 2 • h + a steigt, und behält zwischen z = 2 • h + a und z = 2 • (h + a) den im wesentlichen konstanten Wert $C_\sigma / 2$ bei. Anschaulich bedeutet dies, dass für z < 0 eine rein geometrische Kapazität $C_\varepsilon$ in einem Dielektrikum 11 vorliegt und für z > 2 • h + a zwei Doppelschichtkapazitäten $C_{DS}$ an den vollständig in das leitfähige Medium 10 eingetauchten Elektroden 5 und 4. Die numerische Lösung zeigt, dass C(z) zwischen 0 und h + a geringfügig ansteigt und im Bereich z = h + a die Steigung von C(z) kontinuierlich zunimmt. Beide Lösungen zeigen, dass der bevorzugte Messbereich im Gebiet des grossen Kapazitätsanstiegs zwischen h + a und 2 • h + a liegt. Daher wird man für einen optimalen Sensorbetrieb bevorzugt diejenige Elektrodenpaar - Kapazität C(z) auswerten, für welche die untere Elektrode vollständig und die obere Elektrode teilweise in das leitfähige Medium 10 eingetaucht ist.

Ein Vorteil der digitalen Anzeige ist es, dass der Signalhub $2 \cdot C_\sigma / C_\varepsilon$ je nach gefordertem Signal - Rausch - Verhältnis und Art der Medien 10, 11 durch eine geeignete Wahl der relativen Elektrodenhöhe h / a gemäss Fig. 5 angepasst und insbesondere optimiert werden kann. Ein weiterer Vorteil besteht darin, dass eine für Separatortanks ausreichende und zuverlässige Höhenauflösung h + a ≈ 5 cm bis 10 cm erzielbar ist, indem die Periodenlänge h + a der Elektrodenanordnung 4, 5, 6, 13 entsprechend gewählt ist.

Eine sehr feine Höhenauflösung kann darüberhinaus mit einer analogen Anzeige realisiert werden. Für diesen Zweck ist mit Gleichung G20 aus dem analogen Messsignal C(z) im Bereich h + a ≤ z ≤ 2 • h + a (bzw. 2 • h + 2 • a ≤ z ≤ 3 • h + 2 • a, usw.) eine Füllstandshöhe z der Grenzschicht 12 bestimmbar. Der für ein gegebenes Elektrodenpaar 5, 4 nützliche Messbereich h + a ≤ z ≤ 2 • h + a ist dadurch charakterisiert, dass die Grenzschicht 12 gerade die Elektrode 4 überstreicht und dort die dominante Doppelschichtkapazität $C_{DS}$ variiert. Zwischen den Elektroden 5, 4 existiert hingegen ein Totbereich $h \leq z \leq h + a$. Für einen analog betriebenen Füllstandssensor sollen daher die absolute Elektrodenhöhe h möglichst gross und die relative Elektrodenhöhe h/a in einem Bereich mit hinreichend grossem Signalhub $2 \bullet C_\sigma / C_\varepsilon$ gemäss Fig. 5 gewählt sein. Dies bedeutet, dass h/a erfindungsgemäss grösser als 1 und vorzugsweise kleiner als 12 gewählt ist. Ein Vorteil der Erfindung besteht somit darin, dass die Messsonde 1, insbesondere die relative Elektrodenhöhe h / a, gleichzeitig für eine digitale und analoge Anzeige optimierbar ist.

Ein durchgehender analoger Messbereich kann auch durch zwei unabhängige, zueinander versetzt angordnete Messsonden 1 mit überlappenden oder zumindest komplementären Messbereichen realisiert sein. Im einfachsten Fall sind die Sonden 1 identisch und weisen wiederum ein Verhältnis von Elektrodenhöhe zu Elektrodenabstand h / a grösser als 1 auf.

Aus Fig. 6 und den Gleichungen G1 und G2 ist ferner ersichtlich, dass die Elektrodenabdeckung 7 möglichst dünn sein soll, um eine grosse Doppelschichtkapazität $C_{DS}$ und einen grossen Signalhub $2 \bullet C_\sigma / C_\varepsilon$ zu erhalten. Mit Vorteil sind die Dicken $d_j$ der Abdeckungen 7 kleiner als ein Maximalwert $d_e$ von 2,5 mm, bevorzugt kleiner als 1,5 mm und insbesondere kleiner als 1 mm. Die Abdeckung 7 wirkt als dielektrische Abschirmung für das E - Feld im Aussenraum und behindert dadurch die Ausbildung der Doppelschichtkapazität $C_{DS}$. Mit Vorteil weist die Abdeckung 7 eine Dielektrizitätskonstante $\varepsilon_e$ kleiner als 10 und insbesondere kleiner als 5 auf.

Die obigen Betrachtungen beziehen sich auf eine Grenzschicht 12 zwischen einem Ionenleiter bzw. Elektrolyten 10 und einem Isolator 11. Bei den Berechnungen wurde die Frequenz f der Kapazitätsmessung gleich null gesetzt. Die Resultate behalten jedoch ihre Gültigkeit, wenn die Kapazitätsmessung anstatt mit Gleichspannung mit Wechselspannung der Frequenz

$$f < \tau_1^{-1} \approx (K \bullet \varepsilon_1 \bullet \varepsilon_0 \bullet \rho_1)^{-1} = f_1 \qquad \text{(G21)}$$

durchgeführt wird. Die Grenzfrequenz $f_1$ der dielektrischen Relaxation beträgt für Salzwasser typischerweise 1 GHz.

Die erfindungsgemässe Elektrodenoptimierung behält ebenfalls ihre Gültigkeit, wenn eine Grenzschicht 12 zwischen zwei leitfähigen Medien 10, 11 mit sehr unterschiedlichen spezifischen Widerständen $\rho_1 << \rho_2$ geortet werden soll. Die durch die Grenzschicht 12 separierten Medien 10, 11 weisen dann gemäss Gleichung G21 unterschiedliche dielektrische Grenzfrequenzen $f_1 = (K \bullet \varepsilon_e \bullet \varepsilon_0 \bullet \rho_1)^{-1}$ und $f_2 = (K \bullet \varepsilon_e \bullet \varepsilon_0 \bullet \rho_2)^{-1}$ auf und die Frequenz der Kapazitätsmessung bzw. Messfrequenz f kann zwischen den Grenzfrequenzen $f_2$ und $f_1$, d. h. im Frequenzbereich

$$f_2 << f << f_1 \, . \qquad \text{(G22)}$$

gewählt sein. Das leitfähigere Medium 10 ist dann in der Lage, eine Doppelschichtkapazität $C_{DS}$ zu bilden, wohingegen im weniger leitfähigen Medium 11 nur die geometrische Kapazität $C_\varepsilon$ wirksam ist. Für Öl 11 gilt $f_2 << 1$ Hz.

Darüberhinaus ist die Elektrodenoptimierung und die Wahl einer Messfrequenz gemäss Gleichung G21 oder G22 mit der Wahl der Messfrequenz(en) nach Gleichung G18 oder G19 zur messtechnischen Eliminierung eines leitfähigen Schmutzfilms 14 gut vereinbar. Im allgemeinen ist nämlich für die Medien 10, 11 und einen Schmutzfilm 14 eine kritische Frequenz $f_c$ so gegeben oder wählbar, dass $f_2 < f_c < f_1$ erfüllt ist. Insbesondere gilt praktisch immer

$$f_c / f_1 = (\rho_1 / \rho_f) \bullet G^{-1} < 1 \, , \qquad \text{(G23)}$$

da typischerweise $\rho_1 \leq \rho_f$ und $G^{-1} = (2 \bullet d_e \bullet b)/h^2 \approx 10^{-2}...10^{-3}$. Dann ist eine Messfrequenz im Frequenzbereich $f_c < f < f_1$ wählbar, für welche der Schmutzfilm 14, aber nicht das leitfähige Medium 10 transparent ist. Zudem wird in völliger Übereinstimmung mit der erfindungsgemässen Elektrodenoptimierung mit Vorteil die Elektrodenhöhe h gross und die Dicke $d_e$ der Abdeckung 7 klein gewählt, um den Geometriefaktor G möglichst gross und die kritische Frequenz $f_c$ des Schmutzfilms 14 möglichst klein zu machen.

Schliesslich ist eine Optimierung der Elektrodenhöhe h auch mit der Variation der Abdeckungsdicke $d_i$ und insbesondere mit einer radialen Versetzung der Elektroden 4, 5, 6, 13 zur Detektion eines isolierenden Schmutzfilms 14 verträglich. Auch können die Elektroden 4, 5, 6, 13 problemlos vertikal orientiert und grossflächig gewählt werden, wodurch das Kapazitätsverhältnis $C_\sigma / C_\varepsilon$ besonders gross wird. Zudem bestehen generell bezüglich des Querschnitts der Sonde 1 keine Einschränkungen. Gegebenenfalls sind in den Gleichungen geometrische Grössen, wie z. B. die Elektrodenhöhe h, die Kondensatorflächen $A_i$, die Dicken $d_i$ der Abdeckung 7 oder die Filmdicken b, $b_c$ und $d_s$, durch mittlere oder Effektivwerte zu ersetzen. Insbesondere sind die Gestalt der Elektroden 4, 5, 6, 13 nicht auf die erwähnte Rechteckform beschränkt. Die Elektroden 4, 5, 6, 13 dürfen im abgerollten Zustand auch eine Trapezform, Dreiecksform o. ä. aufweisen.

Das Rohr 2 besteht aus einem Dielektrikum wie Kunststoff, Plexiglas, PVC, Glas, Keramik oder dgl.. Das Rohrinnere 3 mit den Messleitungen 8 und Ummantelungen 9 ist vorteilhafterweise mit einem Epoxydharz ausgegossen. Dies gewährleistet stabile Grundkapazitäten und macht die Sonde 1 hochdruckbeständig. Die Elektrodenabdeckung 7 besteht beispielsweise aus einem giessfähigen Überzug aus Epoxydharz oder aus Glas, einer Keramik, Glimmer o. ä. und ist insbesondere faserverstärkt. Bevorzugt besteht die Elektrodenabdeckung 7 aus einer ca. 0,5 mm … 1 mm dünnen, stabilen Glasfaserummantelung, die mit Epoxydharz überstrichen ist. Für eine gute mechanische Temperaturbeständigkeit der Sonde 1 werden bevorzugt Materialien mit ähnlichen thermischen Ausdehnungskoeffizienten verwendet. Insgesamt offenbart die Erfindung eine kapazitive Messsonde 1, die sehr gut zur genauen Füllstandsmessung in Gegenwart beliebiger Schmutzfilme 14 geeignet.

**BEZUGSZEICHENLISTE**

| | |
|---|---|
| 1 | kapazitive Messsonde, Messstab |
| 2 | Rohr |
| 2b | Mantelfläche |
| 3 | Rohrinneres |
| 4, 5, 6, 13 | Elektroden |
| 5a, 5b | segmentförmige Elektroden |
| 7 | Elektrodenabdeckung |
| 8 | Messleitungen |
| 9 | Ummantelung |
| 10 | Wasser, leitfähiges Medium, Medium mit dielektrischer Relaxationszeit $\tau_1$ |
| 11 | Öl, isolierendes Medium, Medium mit dielektrischer Relaxationszeit $\tau_2$ |
| 12 | Grenzschicht |
| 14 | Schmutzfilm |
| 15 | Oberfläche der Messsonde |
| a | Elektrodenabstand |
| h | Elektrodenhöhe |
| $d_e$, $d_1$, $d_2$, $d_j$, $d_{j+1}$, $d_{j+2}$ | Dicke der Elektrodenabdeckung |
| $d_s$ | Dicke eines dielektrischen Schmutzfilms |
| $b_c$ | Dicke eines leitfähigen Schmutzfilms |
| f | Frequenz der Kapazitätsmessung |
| $f_1$, $f_2$ | Grenzfrequenzen der dielektrischen Relaxation der Medien 10, 11 |
| $f_c$ | Grenzfrequenz der dielektrischen Relaxation des Schmutzfilms |

| | |
|---|---|
| r | Radius der Messsonde |
| z | Füllstandshöhe, Ortskoordinate einer Grenzschicht |
| $\Delta$ | Messungenauigkeit |
| $\varepsilon_0$ | Influenzkonstante |
| $\varepsilon_M$ | Dielektrizitätskonstante eines Mediums |
| $\varepsilon_e$ | Dielektrizitätskonstante der Elektrodenabdeckung |
| $\varepsilon_s$ | Dielektrizitätskonstante des Schmutzfilms |
| $\rho_f$ | spezifischer Widerstand des Schmutzfilms |
| $\rho_M$ | spezifischer Widerstand eines Mediums |
| $\tau, \tau_1, \tau_2$ | dielektrische Relaxationszeitkonstanten eines Mediums |
| $\tau_f, \tau_{f0}$ | dielektrische Relaxationszeitkonstante des Schmutzfilms |
| $\omega$ | Kreisfrequenz der Kapazitätsmessung |
| $A, A_j, A_{j+1}$ | Doppelschicht - Kondensatorflächen |
| B | Sondenachse |
| $C_{DS}, C_{DS1}, C_{DS2}$ | Doppelschichtkapazitäten |
| $C_{DSf}$ | Doppelschichtkapazität eines leitfähigen Schmutzfilms |
| $C_\varepsilon$ | Elektrodenpaar - Kapazität für ein isolierendes Medium |
| $C_\sigma, C_{\sigma S}$ | Elektrodenpaar - Kapazität für ein leitfähiges Medium |
| $C(z), C$ | Gesamtkapazität, Elektrodenpaar - Kapazität |
| G | Geometriefaktor |
| $R, R_{ij}, R_{jk}, R_{ik}$ | Widerstände im leitfähigen Medium |

**Patentansprüche**

1. Verfahren zur Füllstandsmessung, insbesondere geeignet zur Ortsbestimmung einer Grenzschicht (12) zwischen Wasser (10) und Öl (11) in einem Separatortank, wobei Kapazitäten zwischen Elektroden (4, 5, 6, 13) gemessen werden, die entlang einer Achse (B) einer stabförmigen Sonde (1) angeordnet und mit elektrisch isolierenden Abdeckungen (7) versehen sind, dadurch gekennzeichnet, dass

   a) Abdeckungen (7) mit unterschiedlichen Dicken ($d_i$, $d_j$) vorhanden sind und
   b) mit Hilfe von Kapazitätsmessungen zwischen mehreren Elektroden (4, 5, 6, 13) eine effektive Dicke ($d_s/\varepsilon_s$) eines isolierenden Schmutzfilms (14) berechnet wird.

2. Verfahren zur Füllstandsmessung nach Anspruch 1, dadurch gekennzeichnet, dass

   a) ein Quotient von Doppelschichtkapazitäten $C_{DSj}$ und $C_{DSi}$ vor einer i - ten und j - ten Elektrode gemäss der Formel

$$C_{DSj}/C_{DSi} = (C_{\sigma_{ij}}^{-1} + C_{\sigma_{ik}}^{-1} - C_{\sigma_{jk}}^{-1})/(C_{\sigma_{ij}}^{-1} + C_{\sigma_{jk}}^{-1} - C_{\sigma_{ik}}^{-1})$$

bestimmt wird, wobei $C_{\sigma_{ij}}$, $C_{\sigma_{ik}}$, $C_{\sigma_{jk}}$ Gesamtkapazitäten bezeichnen, die zwischen der i - ten und j - ten, der j - ten und einer k - ten, der i - ten und k - ten Elektrode gemessen werden und
b) die effektive Dicke ($d_s/\varepsilon_s$) gemäss der Formel

$$d_s/\varepsilon_s = (d_i/\varepsilon_e) \bullet [(C_{DSj} \bullet d_j \bullet A_i)/(C_{DSi} \bullet d_i \bullet A_j) - 1]/[1 - C_{DSj} \bullet A_i/C_{DSi} \bullet A_j]$$

berechnet wird, wobei $\varepsilon_e$ = Dielektrizitätskonstante der Abdeckungen (7), $d_i$, $d_j$ = Dicken der Abdeckungen (7) und $A_i$, $A_j$ = Kondensatorflächen der i - ten, j - ten Elektrode (4, 5).

3. Verfahren zur Füllstandsmessung nach Anspruch 1, dadurch gekennzeichnet, dass

a) benachbarte Elektroden (13, 4; 4, 5; 5, 6) unterschiedliche Dicken und übernächst benachbarte Elektroden (13, 5; 4, 6) gleiche Dicken der Abdeckung (7) aufweisen,
b) ein Quotient von Doppelschichtkapazitäten $C_{DSj}$ und $C_{DSi}$ vor einer i - ten und j - ten Elektrode gemäss der Formel

$$C_{DSj}/C_{DSi} = C_{\sigma_j}/C_{\sigma_i}$$

bestimmt wird, wobei $C_{\sigma_j}$, $C_{\sigma_i}$ Gesamtkapazitäten bezeichnen, die zwischen übernächsten Elektroden (13, 5 und 4, 6) gemessen werden und
c) die Elektroden (13, 4, 5, 6) gleiche Kondensatorflächen $A_i = A_j$ aufweisen und die effektive Dicke ($d_s/\varepsilon_s$) gemäss der Formel

$$d_s/\varepsilon_s = (d_i/\varepsilon_e) \bullet [(C_{DSj} \bullet d_j)/(C_{DSi} \bullet d_i) - 1]/[1 - C_{DSj}/C_{DSi}]$$

berechnet wird, wobei $\varepsilon_e$ = Dielektrizitätskonstante der Abdeckungen (7) und $d_i$, $d_j$ = Dicken der Abdeckungen (7) der i - ten, j- ten Elektrode (4, 5).

4. Kapazitiver Füllstandssensor zur Durchführung des Verfahrens nach einem der Ansprüche 1 - 3, umfassend eine stabförmige Sonde (1) mit mehreren, entlang einer Sondenachse (B) angeordneten Elektroden (4, 5, 6, 13), welche mit elektrisch isolierenden Abdeckungen (7) versehen und mit einer Messelektronik verbunden sind, dadurch gekennzeichnet, dass

a) Abdeckungen (7) mit unterschiedlichen Dicken ($d_i$, $d_j$) vorhanden sind und
b) die Messelektronik Mittel zur Kapazitätsmessung zwischen mehreren Elektroden (4, 5, 6, 13), zur Bestimmung eines Quotienten von Doppelschichtkapazitäten $C_{DSj}$ und $C_{DSi}$ vor einer i - ten und j - ten Elektrode und zur Berechnung einer effektiven Dicke ($d_s/\varepsilon_s$) eines isolierenden Schmutzfilms (14) umfasst.

5. Kapazitiver Füllstandssensor nach Anspruch 4, dadurch gekennzeichnet, dass

a) benachbarte Elektroden (13, 4; 4, 5; 5, 6) unterschiedliche Dicken und übernächst benachbarte Elektroden (13, 5; 4, 6) gleiche Dicken der Abdeckung (7) aufweisen und/oder
b) die Elektroden (13, 4, 5, 6) gleiche Kondensatorflächen $A_i = A_j$ aufweisen.

6. Kapazitiver Füllstandssensor nach einem der Ansprüche 4-5, dadurch gekennzeichnet, dass

a) die Dicken ($d_j$) kleiner als ein Maximalwert ($d_e$) von 2,5 mm, bevorzugt 1,5 mm, insbesondere 1 mm, sind und
b) die Abdeckungen (7) eine Dielektrizitätskonstante ($\varepsilon_e$) kleiner als 10, insbesondere kleiner als 5, aufweisen.

7. Kapazitiver Füllstandssensor nach einem der Ansprüche 4-6, dadurch gekennzeichnet, dass

a) für einen Schmutzfilm 14 des spezifischen Widerstands $\rho_f$ eine maximal zulässige Dicke $b_c$ und eine zugehörige kritische Frequenz $f_c = 2 \cdot (\varepsilon_e \cdot \varepsilon_0 \cdot \rho_f)^{-1} \cdot (d_e/h^2) \cdot b_c$ vorgegeben ist, wobei h = Elektrodenhöhe, und
b) eine Messfrequenz $f > f_c$ gewählt ist oder zwei Messfrequenzen $f_a < f_c$ und $f_b > f_c$ gewählt sind.

**8.** Kapazitiver Füllstandssensor nach einem der Ansprüche 4-7, dadurch gekennzeichnet, dass

a) die durch die Grenzschicht (12) separierten Medien (10, 11) unterschiedliche Grenzfrequenzen der dielektrischen Relaxation $f_1$, $f_2$ aufweisen und
b) mindestens eine Messfrequenz f im Frequenzbereich $f_2 < f < f_1$ gewählt ist.

**9.** Kapazitiver Füllstandssensor nach einem der Ansprüche 4-8, dadurch gekennzeichnet, dass

a) ein Verhältnis der Elektrodenhöhe (h) zu einem Elektrodenabstand (a) grösser als 1, insbesondere im Bereich von 1 bis 6, vorzugsweise zwischen 1,5 und 4,5, besonders bevorzugt gleich 3, gewählt ist und
b) der Füllstandssensor für eine analoge und/oder digitale Anzeige ausgerüstet ist.

**10.** Kapazitiver Füllstandssensor nach einem der Ansprüche 4-9, dadurch gekennzeichnet, dass

a) die Sonde (1) im wesentlichen aus einem zylindrischen Rohr (2) besteht, an dessen Mantelfläche (2b) die Elektroden (4, 5, 6, 13) aufgebracht sind,
b) das Rohrinnere (3) gegenüber dem die Sonde (1) umgebenden Aussenraum abgeschlossen ist und
c) insbesondere das Rohr (2) kreiszylindrisch ist und die Elektroden (4, 5, 6) ringförmig oder segmentförmig sind und bevorzugt im abgerollten Zustand eine rechteckige Form aufweisen.

**11.** Kapazitiver Füllstandssensor nach Anspruch 10, dadurch gekennzeichnet, dass

a) das Rohr (2) aus einem Dielektrikum, insbesondere aus Kunststoff, Glas oder einer Keramik, besteht und
b) die Abdeckungen (7) der Elektroden aus Epoxydharz, Glas, einer Keramik oder Glimmer bestehen und insbesondere faserverstärkt sind.

B

8

9

3

1

Z

2h + a

4

$d_e$

h + a

2

2b

h

A

A

5

12

11

O

10

6

7

B

(a)

A – A

3

2

5

7

B

$d_e$

(b)

$2r_f$

A – A

3

2

5a

$d_e$

5b

B

7

(c)

Figur 1

**Figur 2**

Figur 3a

Figur 3b

Figur 4

Fig. 5

Fig. 6